# EUROPÄISCHE PATENTANMELDUNG

(11) **EP 3 255 556 A1**
(43) Veröffentlichungstag der Anmeldung: **13.12.2017**
(21) Anmeldenummer: 16001321.5
(22) Anmeldetag: 10.06.2016
(51) Int. Cl.: G06F 17/21, G06F 17/24, G06F 17/27, G06F 17/28, G06F 3/048, G06F 3/01, G09B 21/00

(54) **SCHNELL-LESE-VERFAHREN UND -SYSTEM FÜR TEXT**

(71) Anmelder: Casutt, Renato, 7000 Chur (CH)
(72) Erfinder: Casutt, Renato, 7000 Chur (CH)
(74) Vertreter: Maiwald, Walter

(57) **Zusammenfassung**

Die Erfindung betrifft ein Verfahren zur Behandlung von Texten (wie in der Beschreibung definiert) bei deren Wiedergabe auf einem Display, bei dem
- ein wiederzugebender digitalisierter Text ausgewählt wird;
- ein Softwareprogramm bereitgestellt wird, das wenigstens eine Regel für das Setzen von wenigstens einer Auszeichnung, die bei der Wiedergabe auf dem Display wahrnehmbar ist, in dem digitalisierten Text enthält
- und das Softwareprogramm auf den digitalisierten Text angewandt wird, um entsprechend der Regel die wenigstens eine Auszeichnung im Text vorzunehmen.

Weiterhin betrifft die Erfindung eine auf einem Datenträger gespeicherte Software zur Durchführung des Verfahrens.

## Beschreibung

### Urheberrecht und Rechtshinweis

Ein Teil der Offenbarung dieser Patentschrift enthält Material, welches dem Urheberschutz unterliegt. Der Urheberrechtsinhaber erhebt keinen Einwand gegen die originalgetreue Wiedergabe der Patentschrift oder der Patentoffenbarung - durch wen auch immer -, wie sie in der Patentakte beziehungsweise den Unterlagen des Patent- und Markenamtes erscheint, behält sich jedoch ansonsten alle Urheberrechte vor. Ferner sind keine in diesem Dokument enthaltenen Verweise auf die Patente oder Erzeugnisse Dritter als Zugeständnis dahingehend auszulegen, dass die vorliegende Erfindung nicht berechtigt ist, derartiges Material aufgrund einer früheren Erfindung vorzudatieren.

### Hintergrund der Erfindung

Die Erfindung betrifft ein Verfahren zur Verbesserung der Lesbarkeit digitalisierter Texte bei deren Wiedergabe auf einem variablen Display. Weiterhin betrifft die Erfindung eine auf einem Datenträger gespeicherte Software zur Durchführung des Verfahrens.

Der Umgang mit großen Textmengen - in geschäftlichen und öffentlichen Dokumenten, Mails, Blogs, Büchern und Prospekten, um nur wenige zu nennen, - ist ein tagtägliches Problem geworden. Das Gelesene wird dabei oft schnell wieder vergessen oder gar nicht erst richtig wahrgenommen. Durch die Überlastung des Auges ist der Betrachter vielfach nicht mehr in der Lage, einen Text richtig und nachhaltig zu lesen.

Es ist bereits bekannt, dass man diesem Problem wenigstens teilweise abhelfen kann, indem die Lesbarkeit von Texten (Ursprungstexte) durch Massnahmen verbessert wird, die deren Wiedergabe betreffen. Die Erfindung liegt allgemein auf dem Gebiet solcher Massnahmen. Spezieller betrifft die Erfindung die in den unabhängigen Patentansprüchen definierten Gegenstände.

Vorteilhafte Ausgestaltungen der Erfindung sind in den abhängigen Patentansprüchen definiert.

Das Gehirnzentrum, welches für das Lesen zuständig ist, unterstützt das Auge mit gezielter Vereinfachung. So wird z.B. beim üblichen schnellen Lesen kein Wort vom ersten bis zum letzten Buchstaben mit dem Auge erfasst. Der Betrachter nimmt nur die beginnenden Buchstaben eines Wortes auf; das Gehirnzentrum fügt diese dann mit den endenden Buchstaben zu einem für den Leser erkennbaren Wort zusammen. Folglich teilen sich Auge und Gehirn zusammenwirkend den Lesevorgang.

Die hier betroffenen Ursprungstexte sind meist gleichförmig in üblicher Typographie wiedergegeben und enthalten keine Hilfen, um den Lesevorgang zu verbessern. Bei gedruckten Texten müssten solche Hilfen schon beim Setzen vorgesehen werden, da sich ein gedruckter Text nicht mehr abändern lässt. Anders ist das bei digitalisierten Texten, die zum Beispiel auf einem Bildschirm wiedergegeben und gelesen werden. Hier ist eine "nachträgliche" Bearbeitung des Ursprungstextes möglich, die dessen Lesbarkeit verbessert, und hier liegt ein wichtiger Schwerpunkt der Erfindung.

Bei der Realisierung der Erfindung wird der Ursprungstext für die Wiedergabe im Schriftbild so verändert, dass das Auge mittels gezielt erzeugter Fixationspunkte über den Text geführt wird. Der Inhalt wird dadurch schneller, bewusster und somit nachhaltiger gelesen. Die Erfindung wird daher auch als "Bionik-Typographie" bezeichnet, so in den beigefügten Abbildungen.

Die Fixationspunkte werden erfindungsgemäß durch Auszeichnungen (im typographischen Sinn) realisiert, beispielsweise durch Wiedergabe von im Ursprungstext normalschriftlichen Buchstaben (speziell der Anfangsbuchstaben von Wörtern) in fetterer Schrifttype.

Im Rahmen dieser Anmeldung bedeutet "Auszeichnungsmuster" (oder kurz: "Muster") die Wahl der Textpositionen, bei denen eine Auszeichnung gesetzt und so ein Fixationspunkt erzeugt wird. Die Wahl der dabei verwendeten Auszeichnung wird als "Auszeichnungsart" bezeichnet.

Die visuelle Wahrnehmung erfolgt durch Fixationen. Während einer Fixation wird der Blick etwa 0,3 Sekunden auf einen Fixationspunkt gerichtet. Dann springt er in einer schnellen, ruckhaften Bewegung (Sakkade) zu einem anderen Fixationspunkt. In den Fixationsphasen werden hochauflösende visuelle Detailbilder über die Sehgrube des Auges (Fovea) aufgenommen, während der Sakkaden ist keine Wahrnehmung möglich. Der Eindruck des Sehens wird durch das periphere Gesichtsfeld sowie die bereits gespeicherten Seheindrücke aufrechterhalten. Die Fixationen dienen dazu, innere Vorstellungsbilder mit der Realität abzugleichen. Insofern unterscheidet sich die Wahrnehmung von einem Computer-Input. Ein erfahrener Mensch benötigt weniger Fixationen, um etwas zu erkennen, als ein unerfahrener. Die Zahl der Fixationen pro Sekunde schwankt nur geringfügig und lässt sich willentlich nicht wesentlich beeinflussen.

Menschen lesen einen Text, indem ihr Blick entlang der Leserichtung über die Schrift auf einzelne Wortteile oder Wörter springt. Während einer Fixation von durchschnittlich 250 bis 350 ms Dauer werden Teilwahrnehmungen mit gespeicherten Daten abgeglichen (visuelle Worterkennung).

Ist ein Wort unverständlich oder unbekannt, wird häufig auf die Buchstabiermethode oder das Lautieren zurückgegriffen, was den Leseprozess verlangsamt. Findet man im bisher Gelesenen keinen Sinn, kommt es oft zu Regressionen (Rücksprüngen zu bereits gelesenen Textteilen).

Beim Lesen wird also nicht jedes einzelne Wort fixiert. Dagegen benötigen lange und seltene Wörter je nach vorhandenem visuellen Wortschatz mehrere Fixationen für eine korrekte Worterkennung.

Die Fixationspunkte (durch Auszeichnungen realisiert) werden bei bevorzugten Ausführungsformen der Erfindung in wählbaren, kleineren oder grösseren Abständen gesetzt. Beispielsweise werden Fixationspunkte nach jedem zweiten, dritten, vierten, usw. Wort definiert und das so definierte Auszeichnungsmuster wird mittels eines Algorithmus auf den gesamten Text angewendet. In anderen Ausführungsformen wird das erste Wort eines jeden Satzes, oder eines jeden zweiten Satzes durch Auszeichnung markiert. Die Setzung der Fixationspunkte kann nach einem programmseitig vorgegeben Muster erfolgen, welches der Leser nur anwählt. Alternativ kann vorgesehen sein, dass der Leser sein eigenes Muster definiert und im Programm abspeichert. So kann jeder Leser sein individuell bevorzugtes Muster von Auszeichnungen (Fixationspunkten) entsprechend seinem Leseverhalten auswählen und durch die Software visualisieren lassen. Dies ermöglicht die Anpassung des Auszeichnungsmusters an die Lesegewohnheiten und die Erfahrenheit des Lesers, die Schwierigkeit des Textes und an andere individuelle Aspekte der Interaktion von Leser und Gelesenem.

Während bei der soeben beschriebenen Ausführungsform der Erfindung die Fixationspunkte entsprechend einer festgelegten Wiederholungsfrequenz gesetzt werden, ist es in anderen Ausführungsformen vorgesehen, bei der Setzung der Fixationspunkte speziellere Kriterien zu berücksichtigen. So kann man vorsehen, speziell längere Wörter, Fremdwörter, technische Begriffe oder beispielsweise mit Versalien beginnende Wörter auszuzeichnen. Für solche Zwecke wird die Software eine entsprechende Regel und ggf. eine Bibliotheksfunktion umfassen.

Ein Beispiel für die Anwendung solcher speziellerer Auszeichnungsregeln basiert auf einer Worterkennung, für die der Text mittels einer entsprechenden Worterkennungs-Komponente der Software aufgearbeitet wird. Diese ermittelt im Text zum Beispiel solche Bestandteile (z. B. Wörter), die eine hohe Wiederholungsrate zeigen. Das kann auf den gesamten Text oder auf einzelne Textabschnitte bezogen sein. Solche besonders häufig auftretenden Bestandteile werden dann nicht ausgezeichnet, da sie sich als Fixationspunkte nicht eignen. Bei den Bestandteilen, die eine niedrige Wiederholungsrate zeigen, wird eine erfindungsgemäße Auszeichnung vorgesehen, beispielsweise indem die beiden ersten Buchstaben fetter widergegeben werden als die folgenden Buchstaben. Die hier betrachtete Widerholungsrate kann beliebig definiert werden, beispielsweise auf Basis der mittleren (durchschnittlichen) Wiederholungsrate bezogen auf alle im Text vorkommenden Bestandteile, oder auf eine numerisch definierte Zahl von Wiederholungen im Text. Beispielsweise können nur solche Bestandteile ausgezeichnet werden, die im Text nur einmal, oder maximal dreimal vorkommen. Die Auszeichnungsregel kann zum Beispiel berücksichtigen, ob es sich um Bestandteile handelt, die mit Versalien beginnen.

Wenn man so eine Regel auf den oben dargestellten Fall anwenden will, bei dem eine festgelegte Wiederholungsfrequenz der Auszeichnung definiert ist, werden die Bestandteile, deren Wiederholungsfrequenz im Text "hoch" ist, bei der Anwendung der festgelegten Wiederholungsfrequenz nicht berücksichtigt. Dann wird also beispielsweise jeder zweite Bestandteil durch Auszeichnung hervorgehoben, wobei die mit "hoher" Wiederholungsfrequenz auftretenden Bestandteile nicht mitgezählt werden. Im Ergebnis ist im Display dann nicht jeder zweite Bestandteil durch Auszeichnung hervorgehoben.

Die erfindungsgemäß verwendete Software basiert auf darin hinterlegten Regeln, die die Anpassung der Darstellung des Textes an die Lesegeschwindigkeit des Anwenders erlauben. Dies beruht auf der gezielten Steigerung der optischen Erkennbarkeit von Textbestandteilen in dem erfindungsgemäß umgewandelten Mengentext. Der Anwender kann aus den vom System vorgegebenen Regeln eine geeignete auswählen oder selbst eine Regel definieren, die seiner optimalen Lesegeschwindigkeit bzw. seinem optimalen Textverständnis dienlich ist. Die Auswahl der Regel bewirkt die Umwandlung des Ursprungstexts gemäß dem gewählten (der Regel entsprechenden) Muster von Fixationspunkten, zum Beispiel die Hervorhebung bestimmter Wortfragmente in bestimmten Textpositionen durch entsprechende Auszeichnungen, wobei dann die übrigen Wortfragmente weniger stark auffallend und damit weniger sichtbar dargestellt werden.

Der Anwender kann eine entsprechende Software auf sein digitales Medium (PC, Laptop, Tablet, e-Reader, Smartphone u. dgl.) herunterladen, insbesondere von einem entsprechenden Anbieter über das Internet. Nach der Installation kann die Software auf einen beliebigen digitalen Text angewandt werden, um dessen Wiedergabe auf dem Display des Mediums gemäß einer ausgewählten oder anwenderseitig definierten Auszeichnungsregel erfindungsgemäß zu gestalten.

Die Fixationspunkte basieren auf den optischen Parametern der (typographischen) Auszeichnungsarten. Die Auszeichnungsarten können untereinander kombiniert werden. So kann z.B. die Auszeichnung «fette Schrift» (extra bold) mit der Auszeichnung «halbfette Schrift» (bold) kombiniert werden, beispielsweise indem in einem Wort der Anfangsbuchstabe in fetter Schrift und der folgende Buchstabe in halbfetter Schrift wiedergegeben werden. Es ist ebenfalls möglich, dass auch die endenden Buchstaben eine Auszeichnung erhalten, um dadurch die beginnenden Buchstaben zu verstärken.

Die Erfindung eignet sich für sämtliche Schnitte innerhalb der Schriftfamilien und Schriftsippen (Hybrid-Schriften). Die Schriftnormierung mit Schriftbreite (Compressed, Condensed, Normal, Extended, ...), Schriftlage (Normal, Kursiv) und Strichstärke (Fein, Mager, Normal, Halbfett/Medium, Fett, Extrafett, Ultrafett, ...) der einzelnen Schrift ist zentral für eine Schriftfamilie. Sämtliche Schriften werden durch die Schriftnormierung definiert und erhalten dadurch ihre eigenständige Darstellungsart (z.B. Normal, Fett, Kursiv, ...). Eine Schriftsippe ist die grösste Form einer Ansammlung diverser Schriftschnitte innerhalb der gleichen Schrift. So können in einer Schriftsippe verschiedene Merkmale einer Schrift vereint sein. Ist eine Schrift ohne Serifen gezeichnet, so kann es innerhalb der Schriftsippe auch eine Schriftfamilie geben, die eine Schrift ohne Serifen beinhaltet. Die Strukturierung ist folgendermassen; 1. Schriftsippe (beinhaltet mehrere Schriftfamilien der unterschiedlichen Arten {mit Serifen, ohne Serifen}), 2. Schriftfamilie (beinhaltet mehrere Schriften der gleichen Art), 3. Schrift (gilt als die Schrift mit dem entsprechenden Schriftschnitt).

Die Erfindung kann ausserhalb von Schriftfamilien; z.B. bei Schriftmischungen, Auszeichnungsarten und anderen atypischen Schriftkombinationen eingesetzt werden. Bevorzugt für die Auszeichnungsart der einzelnen Buchstabenkombinationen bei Einsatz der Erfindung sind insbesondere folgende Varianten: «halbfette Schrift» (bold) - innerhalb des Strichstärke «fette Schrift» (extra bold) -, «kursive Schrift», «schmal» (condensed), «sperren», «Schriftgrad», «negativ», «andere Schriftart», «unterstreichen», sowie «Versalien». Es ist in bevorzugten Ausführungsformen vorgesehen, dass der Leser sowohl das Auszeichnungsmuster als auch die Auszeichnungsart unter mehreren Vorgaben auswählen oder sogar selbst als Regel definieren kann.

Ein Text im Sinne der Erfindung ist dabei insbesondere, aber nicht ausschließlich, ein "...thematisch und/oder funktional orientierter, kohärenter sprachlicher oder sprachlich-figürlicher Komplex, der mit einer bestimmten [...] Kommunikationsabsicht [...] geschaffen wurde, eine erkennbare kommunikative Funktion [...] erfüllt und eine inhaltlich und funktional abgeschlossene Einheit bildet." (Susanne Göpferich: Textsorten in Naturwissenschaften und Technik. Pragmatische Typologie - Kontrastierung - Translation. Forum für Fremdsprachen-Forschung 27. Narr, Tübingen 1995). Ein Text ist also insbesondere eine Folge von Wörtern, die im syntaktischen Kontext eine inhaltliche Aussage abbilden. Texte im Sinne der Erfindung können Zahlen, Symbole und dergl. umfassen. Eine Tabelle ist im Sinne der Erfindung ein Text, selbst wenn sie keine Wörter enthält. Die software-mäßig festzulegende Regel für die Setzung der Fixationspunkte kann so definiert werden, dass sie nur Wörter (aber keine Zahlen, Symbole etc.) berücksichtigt. Alternativ kann die Regel beispielsweise gerade alle (oder einzelne) Elemente eines Textes auszeichnen, die keine Wörter sind.

Die Erfindung lässt sich unabhängig von der Sprache verwenden, in der der Text abgefasst ist. In besonders bevorzugten Ausführungsformen handelt es sich um Sprachen, die durch Buchstabenschriften aufgezeichnet werden können. Es ist aber auch möglich, Silbenschriften und andere Symbolsysteme erfindungsgemäß zu behandeln.

Auf die Herkunft eines Ursprungstextes kommt es erfindungsgemäß nicht an. Relevant ist sein Vorliegen in digitalisierter Form, damit die Erfindung auf den Text angewandt werden kann, um die Fixationspunkte zu erzeugen, und den so veränderten Text lesbar wiederzugeben. Der Ursprungstext kann digital sein, wie etwa ein am PC geschriebener Text, eine Email oder dgl. Stattdessen kann der Text ursprünglich ein Hardcopy-Text sein, etwa eine Buchseite, ein Typoscript oder sogar eine handschriftliche Aufzeichnung. In solchen Fällen geht die Digitalisierung des Textes der erfindungsgemäßen Verarbeitung im Regelfall voraus.

Die Wiedergabe des veränderten Textes erfolgt mittels eines Displays. Ein Display im Sinne der Erfindung ist jedes Gerät, mit dem ein Satz digitaler Daten, die dem Text entsprechen, so wiedergegeben kann, dass er von einem Menschen gelesen werden kann. Bevorzugt handelt es sich bei dem Display um einen Bildschirm oder Screen, etwa dem eines PC oder Tablets. Die Wiedergabe des erfindungsgemäß veränderten Textes ist dann visuell wahrnehmbar. Die Erfindung läßt sich aber z. B. auch bei taktil lesbaren Texten (beispielsweise Texten in Blindenschrift, mittels Brailledisplay) einsetzen.

Die technische Realisierung der Erfindung erfolgt mittels geeigneter, Software-basierter Vorrichtungen. Dabei kann es sich um speziell für die Realisierung der Erfindung konstruierte Geräte handeln. Es ist aber auch möglich, sich zur Realisierung der Erfindung der existierenden Geräte zu bedienen, die über die notwendigen Funktionalen Einrichtungen (Module) bereits zu anderen Zwecken verfügen. In Frage kommen hier insbesondere die bekannten Mobiltelefone (soweit sie ein geeignetes Display umfassen), Tablets, PCs, e-Reader und dergleichen. Es ist möglich, die für die Realisierung der Erfindung nötigen Software in Form einer "app" bereitzustellen, die vom Benutzer, zum Beispiel über das Internet, auf sein Gerät heruntergeladen wird. Die Darstellung des erfindungsgemäß ausgezeichneten Textes erfolgt dann auf dem Display dieses Gerätes.

In bevorzugten Ausführungsformen ist eine solche Vorrichtung ausgestattet mit einem Eingangsmodul für die Aufnahme von Daten, die einem digitalisierten Text entsprechen; einem Speichermodul für ein Verarbeitungsprogramm, das wenigstens eine Regel für das Setzen von wenigstens einer Auszeichnung in einem digitalisierten Text enthält; einem Verarbeitungsmodul, das die wenigstens eine Regel auf die Daten im Eingangsmodul anwendet, um den digitalisierten Text mit der wenigstens einen Auszeichnung zu versehen und einem Darstellungsmodul, um den ausgezeichneten Text auf einem Display abzubilden. In bekannten Geräten wie den oben genannten Mobiltelefonen etc. sind solche Module bereits enthalten.

Wenn der Benutzer unter verschiedenen Auszeichnungsmustern und/oder Auszeichnungsarten wählen können soll, wird die Vorrichtung ein Eingabemodul für die Definition und/oder die Auswahl einer Regel für das Setzen von Auszeichnungen umfassen. In den schon genannten Geräten gibt es Eingabemodule, die sich für diese Funktion nutzen lassen.

Bei der Realisierung der erfindungsgemäß erforderlichen Software kann man sich an Veröffentlichungen orientieren, die sich mit der Bearbeitung von Texten befassen. Beispiele sind US 6 820 237 (Suhayya et al.); US 7 702 611 (Chi et al.) und US 2002 124026 (Weber), die alle hiermit durch Benennung in den Offenbarungsgehalt dieser Anmeldung einbezogen werden und auf die Bezug genommen wird, um funktionale Aspekte der vorliegenden Erfindung zu offenbaren.

### Beschreibung der Abbildungen

Im Folgenden werden bevorzugte Ausführungsformen der Erfindung anhand der beigefügten Abbildungen näher erläutert. Darin zeigt
**FIG. 1** ein Flussdiagramm für die Analyse des Ursprungstextes und dessen erfindungsgemäße Bearbeitung;
**FIG. 2** ein Flussdiagramm für die Wahl beispielhafter Auszeichnungsregeln;
**FIG. 3-12** Textbeispiele für die Auszeichnungsregeln gemäß Fig. 2;
**FIG. 13** - **15** Beispiele verschiedener Auszeichnungsarten.

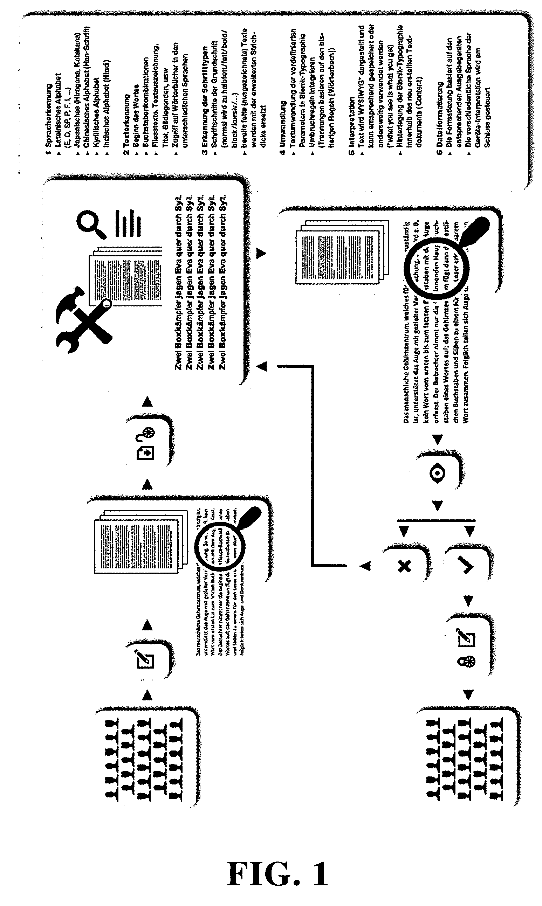

In **FIG. 1** wird dargestellt, mittels welcher (softwaremäßig realisierbarer) Schritte ein Ursprungstext zunächst analysiert wird. Dies umfasst Spracherkennung, Texterkennung und Schrifttyp-Erkennung.

Es folgt die erfindungsgemäße Textbearbeitung (Umwandlung), bei der Auszeichnungsmuster und Auszeichnungsart auf den analysierten Ursprungstext angewandt werden. Der so veränderte Text kann gespeichert bzw. ausgegeben werden (Interpretation) und kann als Datei gespeichert werden (Dateiformatierung).

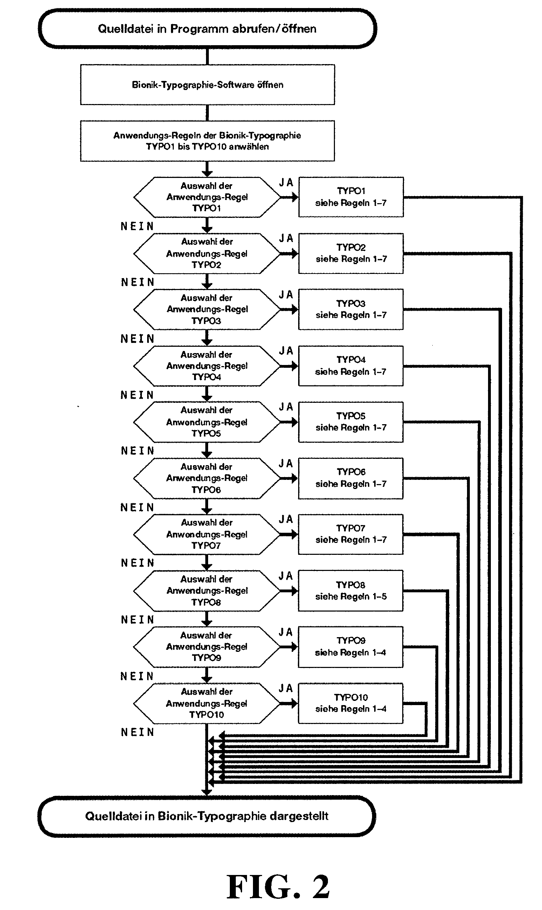

**FIG. 2** zeigt ein Flussdiagramm für die Auswahl unter insgesamt 10 Regeln, die bestimmten Auszeichnungsmustern und Auszeichnungsarten entsprechen.

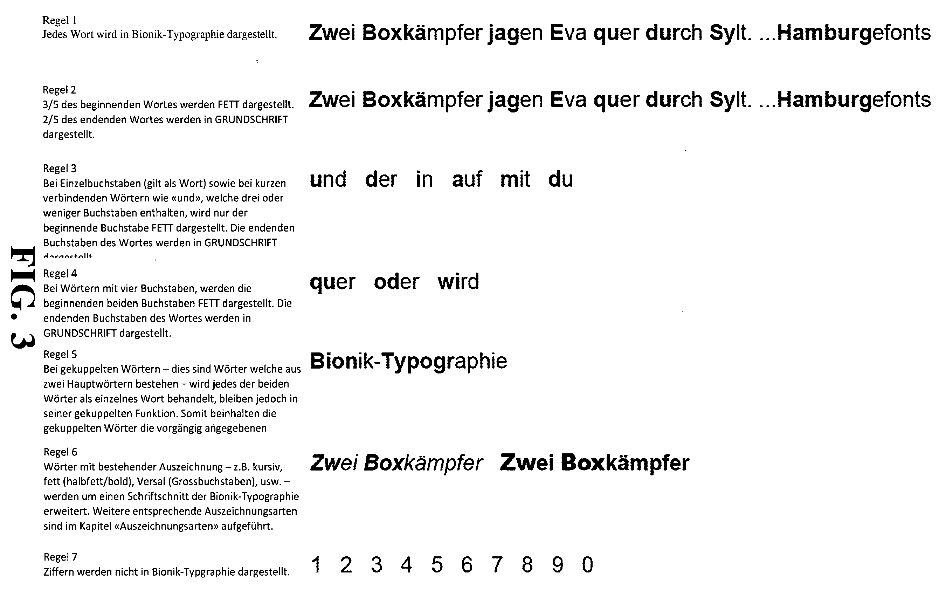

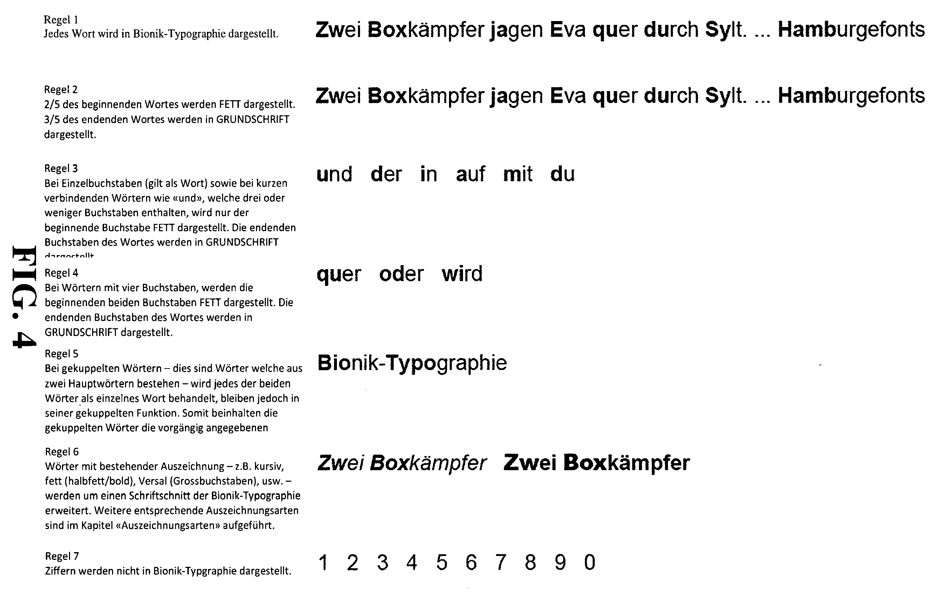

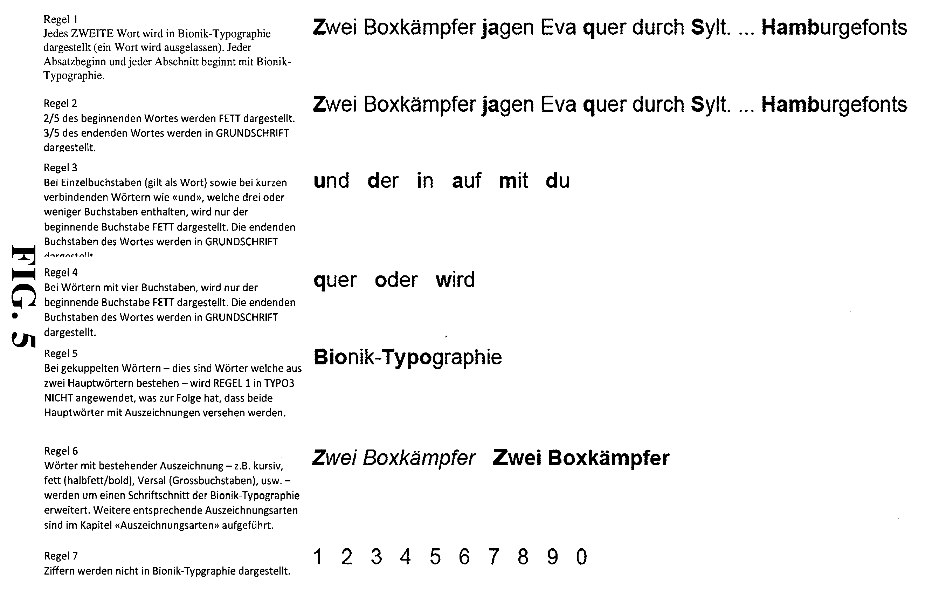

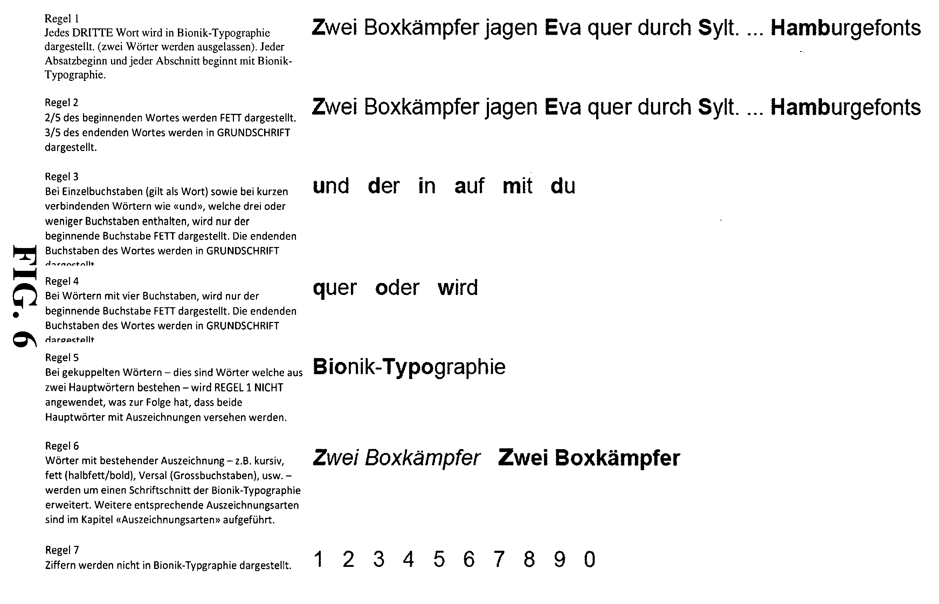

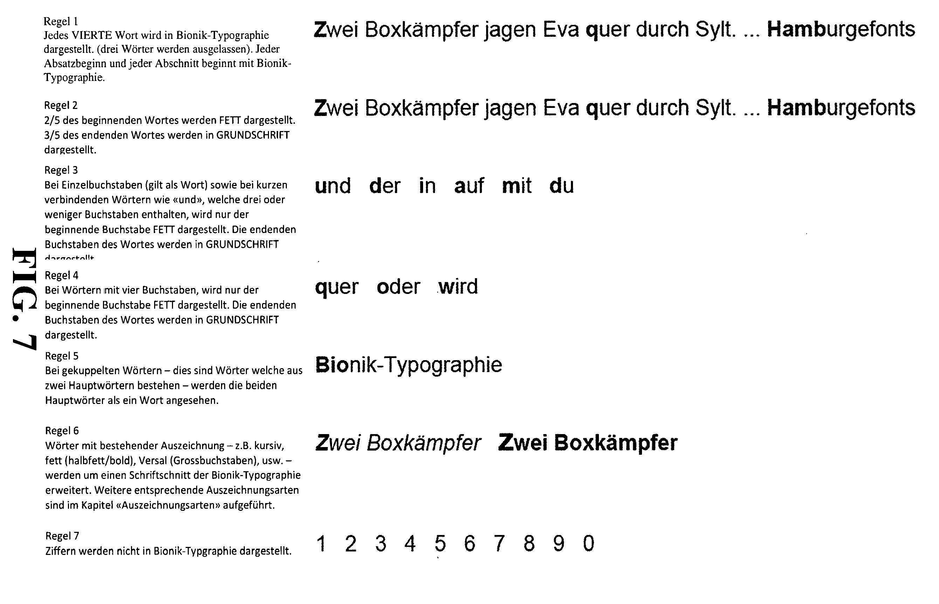

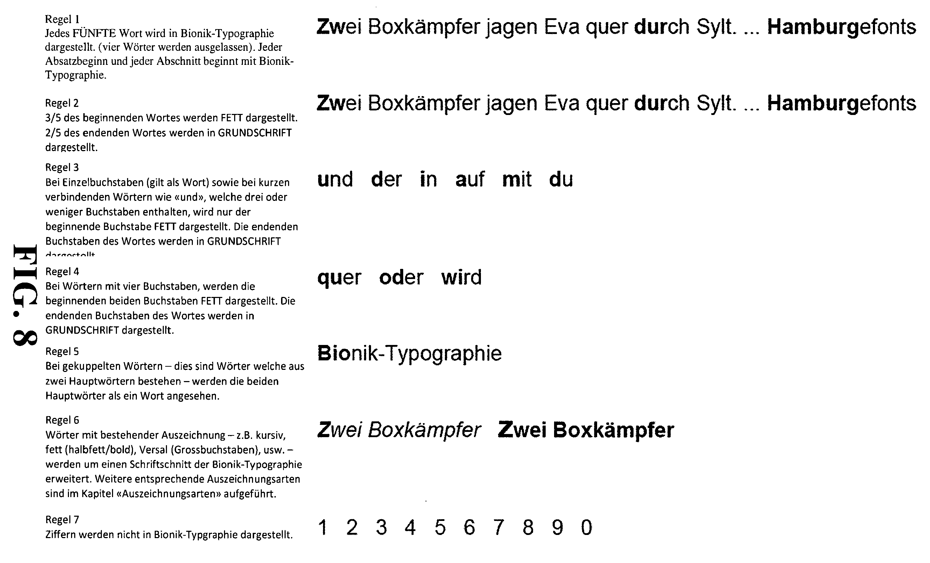

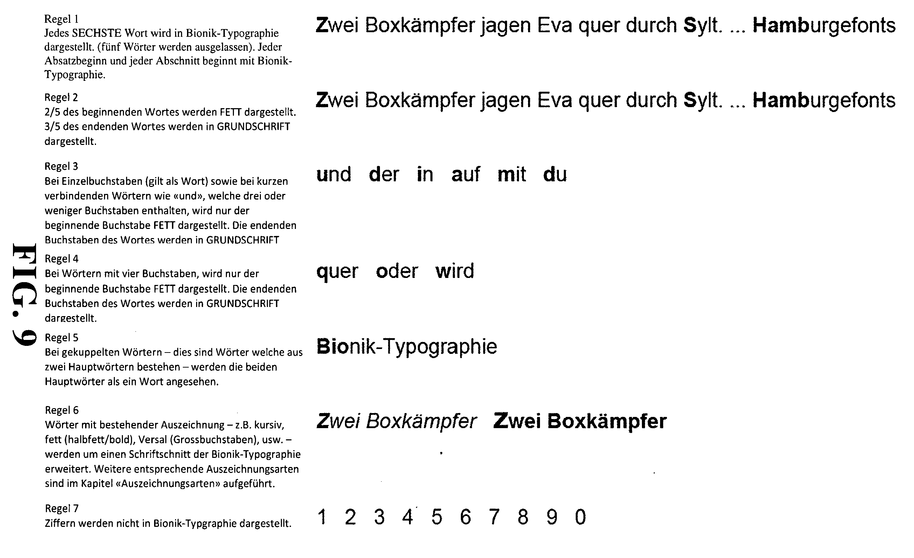

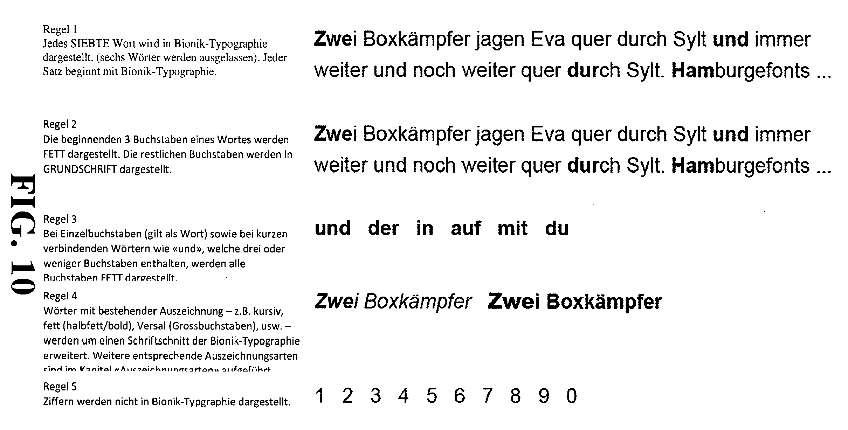

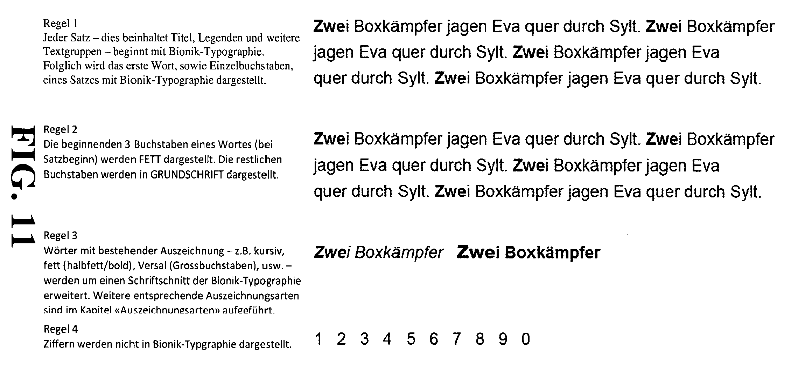

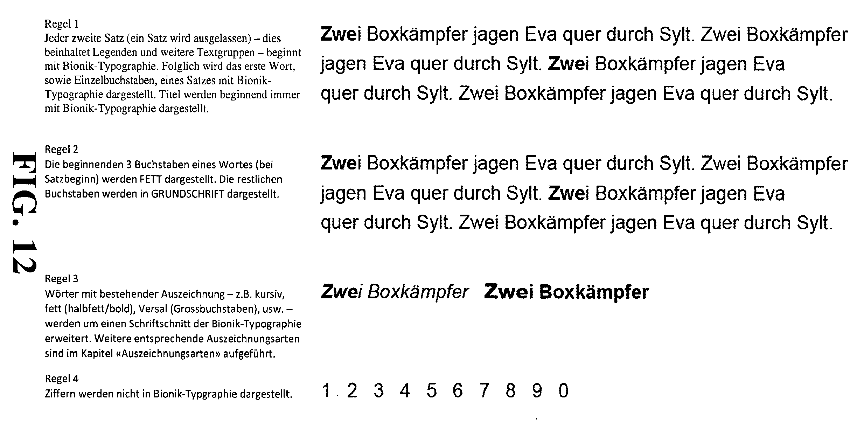

In den **FIG. 3** - **12** sind die daraus resultierenden Texte gezeigt.

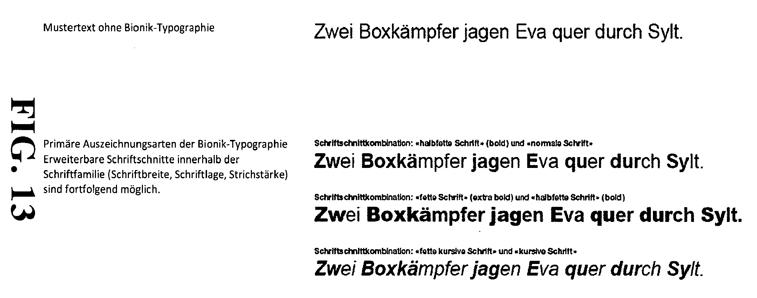

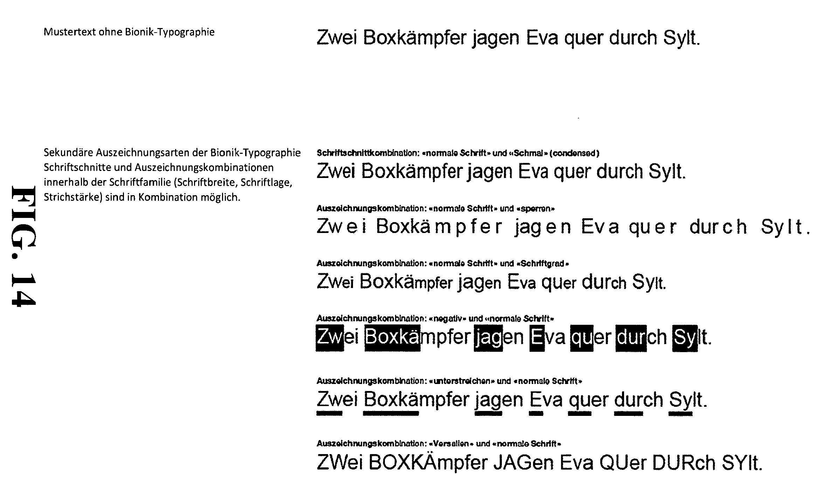

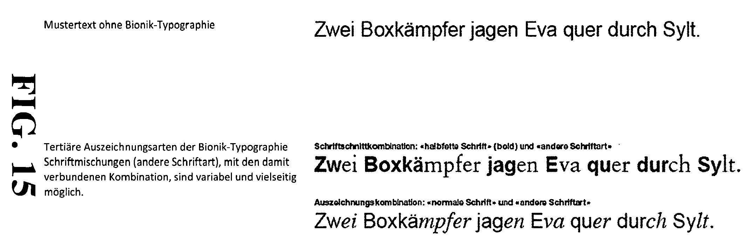

Die Unterschiede zwischen verschiedenen Auszeichnungsarten veranschaulichen die **FIG. 13** -**15**.

Die Anwendungsbereiche der Erfindung sind zahllos; eine Auswahl bevorzugter Anwendungsbereiche ist nachstehend als "Anwendungsbereiche" gelistet.

Die Wiedergabe des erfindungsgemäß veränderten Textes ist dann visuell wahrnehmbar. Die Erfindung läßt sich aber z. B. auch bei taktil lesbaren Texten (beispielsweise Texten in Blindenschrift, mittels Brailledisplay)) einsetzen. Die Offenbarung von US 6636202, für Ishmael Jr., angemeldet am 27 April 2001, wird durch Bezugnahme einbezogen und auf sie wird Bezug genommen wird, um wesentliche Aspekte des taktilen Displays und die Umwandlung von einfallendem Licht von einem visuellen Bild in elektrische Signale zu beschreiben, die der Grauskala-Intensität des einfallenden Lichts proportional sind, was das Verfahren und die Vorrichtung der vorliegenden Erfindung in die Lage versetzt, eine Auszeichnung mittels Anhebung von Elementen des taktilen Displays zu bewirken, wie im Patent von Ishmael Jr. beschrieben.

### Anwendungsbereiche

### Anwendungsbereiche der digitalen Medien

Voraussetzung: vorinstallierte online Applikationen
- E-Mail (Apple, Microsoft, IBM, Dell)
- E-Books (Kindle, Kobo, Tolino)
- Social Media (Facebook, Twitter)
- Blogs (Tumblr, freier Journalismus)
- Dienstleistungs-Portale
- Suchmaschinen (Google, Yahoo, Bing, DuckDuckGo)
- Smartphone/ Tablet für Kommunikations-Applikationen (Samsung, Apple, HTC, Blackberry)
- Websites (Content von Unternehmen)
- E-Paper (Medienlandschaft)
- Weitere

### Anwendungsbereiche der analogen Medien

Voraussetzung: vorinstallierte DTP-Programme von Herstellern wie Adobe (InDesign, Acrobat, Illustrator, ...), Microsoft (Word, Excell, ...), Apple (Pages, TextEdit, ...)
- DeskTopPublishing (Adobe, Microsoft Dos, Apple)
- Universitäten
- Schulen
- Staaten/ Länder (jeweilige Ämter)
- Weitere

### Produkte der analogen Medien

- Bücher
- Zeitungen (Medienlandschaft)
- Betriebsanleitungen
- Gebrauchsanweisungen
- AGB
- Geschäftsberichte
- Zeitschriften/ Magazine
- Prospekt
- Broschüren
- Weitere

## Patentansprüche

1. Verfahren zur Behandlung von Texten (wie in der Beschreibung definiert) bei deren Wiedergabe auf einem Display, bei dem
- ein wiederzugebender digitalisierter Text ausgewählt wird;
- ein Softwareprogramm bereitgestellt wird, das wenigstens eine Regel für das Setzen von wenigstens einer Auszeichnung, die bei der Wiedergabe auf dem Display wahrnehmbar ist, in dem digitalisierten Text enthält
- und das Softwareprogramm auf den digitalisierten Text angewandt wird, um entsprechend der Regel die wenigstens eine Auszeichnung im Text vorzunehmen.

2. Verfahren nach Anspruch 1, bei dem das Softwareprogramm eine Mehrzahl verschiedener Regeln umfasst, die wählbar sind.

3. Verfahren nach Anspruch 1 oder 2, bei dem die Auszeichnungen visuell wahrnehmbar sind.

4. Verfahren nach einem der Ansprüche 1 bis 3, bei dem das Display ein Bildschirm ist.

5. Verfahren nach einem der Ansprüche 1 bis 4, bei dem das Softwareprogramm mehrere unterschiedliche Regeln enthält, die unterschiedlichen Auszeichnungen entsprechen, und vom Benutzer des Verfahrens wählbar sind.

6. Verfahren nach einem Ansprüche 1 bis 5, bei dem die Auszeichnungen der Hervorhebung einzelner Textbestandteile entsprechen.

7. Verfahren nach Anspruch 6, bei dem die Hervorhebung in fetter Schrifttype erfolgt.

8. Verfahren nach Anspruch 6, bei dem die Hervorhebung mittels einer Anhebung von Buchstaben bei einem taktilen Display erfolgt.

9. Verfahren nach einem der Ansprüche 1 bis 8, bei dem der Text Wörter umfasst und die Auszeichnungen in der Wiedergabe einzelner Buchstaben oder Buchstabenfolgen in typographisch abweichender Form besteht.

10. Verfahren nach einem der Ansprüche 1 bis 9, bei dem aktive Auszeichnungen, insbesondere fette oder halbfette Buchstaben verwendet werden.

11. Verfahren nach einem der Ansprüche 1 bis 10, bei dem Wortanfänge, insbesondere Anfangsbuchstaben, ausgezeichnet werden.

12. Verfahren nach einem der Ansprüche 1 bis 11, bei dem die wenigstens eine Regel die Wiederholungsfrequenz umfasst, mit der die Auszeichnung gesetzt wird.

13. Verfahren nach Anspruch 12, bei dem die Wiederholungsfrequenz auf der Anzahl nicht ausgezeichneter Textbestandteile zwischen zwei ausgezeichneten Textbestandteilen beruht.

14. Verfahren nach Anspruch 12, bei dem die Wiederholungsfrequenz auf der Anzahl nicht ausgezeichneter Sätze von Textbestandteilen zwischen zwei ausgezeichneten Sätzen von Textbestandteilen beruht.

15. Verfahren nach einem der vorstehenden Ansprüche, bei dem der Text wenigstens einen Satz umfasst, der mehrere Wörter umfasst, bei dem wenigstens zwei Wörter ausgezeichnet sind.

16. Verfahren nach einem der vorstehenden Ansprüche, bei dem der Text eine Mehrzahl von Sätzen umfasst, die mehrere Wörter umfassen, und bei dem wenigstens zwei Sätze ausgezeichnet sind.

17. Softwareprogramm zur Durchführung des Verfahrens gemäß einem der Ansprüche 1 - 16, das wenigstens eine Regel für das Setzen von wenigstens einer Auszeichnung, die bei der Wiedergabe auf dem Display wahrnehmbar ist, in dem digitalisierten Text enthält.

18. Vorrichtung zur Durchführung des Verfahrens gemäß einem der Ansprüche 1 bis 16, mit einem Eingangsmodul für die Aufnahme von Daten, die einem digitalisierten Text entsprechen; einem Speichermodul für ein Verarbeitungsprogramm, das wenigstens eine Regel für das Setzen von wenigstens einer Auszeichnung in einem digitalisierten Text enthält; einem Verarbeitungsmodul, das die wenigstens eine Regel auf die Daten im Eingangsmodul anwendet, um den digitalisierten Text mit der wenigstens einen Auszeichnung zu versehen und einem Darstellungsmodul, um den ausgezeichneten Text auf einem Display abzubilden, sowie einem in der Vorrichtung implementierten Softwareprogramm gemäß Anspruch 15.

19. Vorrichtung nach Anspruch 18, die als Teil eines Mobilphones, eines Tablets, eines PC oder eines digitalen Lesegerätes realisiert ist.

20. Vorrichtung nach Anspruch 18 oder 19, die ein Eingabemodul für die Definition und/oder die Auswahl einer Regel für das Setzen von Auszeichnungen umfasst.

21. Vorrichtung nach einem der Ansprüche 18 bis 20, bei der der Benutzer, insbesondere der Autor oder ein Leser des Textes, eine Software-Regel wählen oder definieren kann, die der besonderen Bedeutung von Textstellen entspricht und die Vorrichtung in Ansprache darauf den Text entsprechend der Regel mit Auszeichnungen versieht, mittels derer ein Schnellleser weniger wichtige Textstellen im Wesentlichen überfliegen oder überspringen kann.
